# EUROPEAN PATENT SPECIFICATION

(11) **EP 3 050 223 B1**
(45) Date of publication and mention of the grant of the patent: **04.12.2019**
(21) Application number: 13894529.0
(22) Date of filing: 27.09.2013
(51) Int. Cl.: H04W 8/00, H04W 48/12

(54) **TECHNIQUES FOR PROXIMITY DETECTION FOR WIRELESS DOCKING**
VERFAHREN ZUR NÄHERUNGSERKENNUNG FÜR DRAHTLOSES ANDOCKEN
TECHNIQUES DE DÉTECTION DE PROXIMITÉ POUR UN ACCUEIL SANS FIL

(43) Date of publication of application: 03.08.2016
(73) Proprietor: Intel Corporation, Santa Clara, CA 95054 (US)
(72) Inventor: LIN, Xintian E., Palo Alo, California 94306 (US)
(74) Representative: HGF Limited
(86) International application number: PCT/US2013/062387
(87) International publication number: WO 2015/047329

(56) References cited:
- WO-A1-2012/048442
- WO-A1-2013/076625
- WO-A2-2012/074332
- GB-A- 2 377 129
- KR-A- 20090 086 767
- KR-A- 20100 060 597
- US-A1- 2003 119 527
- US-A1- 2012 052 829

## Description

### TECHNICAL FIELD

Examples described herein are generally related to proximity detection for wireless docking.

### BACKGROUND

Computing devices having wireless capabilities may communicatively couple to other devices having wireless capabilities via a variety wireless technologies such as Bluetooth® technology, wireless local area network (WLAN) using wireless technologies such as Wi-Fi™ and the like. Also, some wireless technologies may allow wireless capable devices to replace wired interconnects with high speed and relatively short-range wireless interconnects via a process typically referred to as wireless docking. The high speed and relatively short range wireless interconnects using any suitable wireless technology may allow wireless devices to wirelessly dock with devices having one or more input/output devices such as a display, a keyboard, a network interface card, a mouse or a storage device. In some examples, once wirelessly docked, the wireless device may utilize the one or more input/output devices in a same manner as when connected to a wired or physical docking station.

International PCT Patent Application, WO 2013/076625 A1, relates to a method and system for configuring and controlling the initiation of automatic docking for a portable device seeking to dock wirelessly with a docking station.

UK Patent Application, GB 2 3 77 129 A describes a method of wirelessly communicating between a first and second device.

### BRIEF DESCRIPTION OF THE DRAWINGS

- FIG. 1: illustrates an example of a system.
- FIG. 2: illustrates an example block diagram for a first apparatus.
- FIG. 3: illustrates an example block diagram for a second apparatus.
- FIG. 4: illustrates an example of a first logic flow.
- FIG. 5: illustrates an example of a second logic flow.
- FIG. 6: illustrates an example of a third logic flow.
- FIG. 7: illustrates an example of a fourth logic flow.
- FIG. 8: illustrates an example of a first storage medium.
- FIG. 9: illustrates an example of a second storage medium.
- FIG. 10: illustrates an example of a device.

### DETAILED DESCRIPTION

Examples are generally directed to improvements for wireless and/or wireless devices to wirelessly couple or wirelessly dock using wireless technologies including but not limited to Bluetooth® technologies. These wireless technologies may include establishing and/or maintaining wireless communication links and may also include wireless technologies suitable for use with wireless devices or user equipment (UE) capable of coupling to other devices via any suitable wireless technology. For example, while described herein with respect to Bluetooth® technology, standards and connections, wireless devices and the other device described herein may be configured to operate in compliance with various other standards such as those promulgated by the Institute of Electrical and Electronic Engineers (IEEE). These standards may include Ethernet wireless standards (including progenies and variants) associated with the IEEE Standard for Information technology - Telecommunications and information exchange between systems-Local and metropolitan area networks-Specific requirements Part 11: WLAN Media Access Controller (MAC) and Physical Layer (PHY) Specifications, published March 2012, and/or later versions of this standard ("IEEE 802.11").

In some examples, wireless communication links and/or wireless communications between devices may be established or maintained using various wireless technologies and/or standards (e.g., wireless docking). These other devices (e.g. station devices) may have one or more input/output devices to possibly be used by wireless devices upon wirelessly docking. The other devices may include wireless docking capabilities and may include, but are not limited to, a docking device, a smart phone, a smart television, smart audio speakers, a notebook computer, a tablet computer, an Ultrabook™ computer, a netbook computer, desktop computer, a workstation computer, a server, a handheld gaming device, a gaming console, a handheld media player or a media player console. The one or more input/output devices may either be integrated with the other devices or may be coupled via one or more wired and/or wireless connections.

According to some examples, a user of a wireless device may desire to use input/output devices coupled to one or more devices or processing resources of the one or more devices available for public access via an ad-hoc type deployment. For this type of deployment, the user may at least temporarily want to use input/output devices such as monitors or keyboards to improve productivity and user experience. For example, the user's wireless device may be a smartphone with a relatively small display and a large display may improve work efficiency on a productivity application such as a spreadsheet application. For these examples, some techniques have been proposed that use wireless technologies such as near field communications. Use of NFC technologies may require the user to hold the wireless device near an NFC tag for the device to select a device for wireless docking. NFC technologies may be problematic in that some wireless devices may lack NFC capabilities and the wireless device needs to be placed relatively close (e.g., a few inches or centimeters) to the device to establish an NFC link. Other solutions include use of infrared (IR) proximity detection but the range of these solutions is limited and these solutions typically do not provide identity information. Typical radio based solutions (e.g. WiFi™) can be very inaccurate with errors up to 4x and sequential scan and connect techniques used in the past take too long (e.g. between 6-20 seconds) to establish a connection. It is with respect to these and other challenges that the examples described herein are needed.

According to some examples, a combination of Bluetooth® low energy and ultrasound information may be used to accurately determine the proximity of a wireless device to a docking device and a speculative connection may be used to speed up the wireless docking connection process. Determining a proximity to a device or the distance between two devices may be an essential step for establishing a wireless docking connection. Distance measurements between wireless devices may include the use of received signal strength indicator (RSSI) information of sound or radio, ToF of high frequency radio signals, or ToF of sound. For the RSSI information of sound or radio alone, distance measurement suffers from poor accuracy due to unknown antenna gain calibration. In other words, a typical error of 1-2 meters may be obtained. For the ToF of high frequency radio signals, a high-resolution receiver may be required to achieve sub-meter accuracy in measuring the distance. For the ToF of sound, the distance measurement suffers from difficulty of synchronizing the wireless devices. In various embodiments described herein, distances between a wireless device and one or more other devices capable of wirelessly docking to the wireless device may be determined utilizing Bluetooth® low energy (BTLE) signals along with ToF information for ultrasound information. In some examples, using the combination of BTLE, ultrasound information and a speculative connection may enable a wireless device to efficiently establish a wirelessly docking connection with a given device without utilizing additional wireless technologies such as NFC and the like, thereby improving performance and overall user experience.

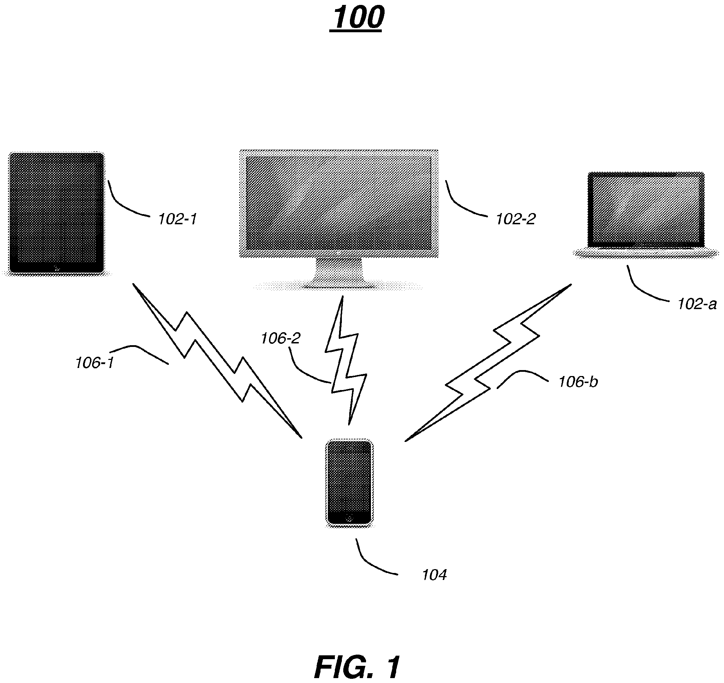

**FIG. 1** illustrates a system-level overview of an example system 100 for implementing proximity detection for wireless docking. In various embodiments, the system 100 may include one or more station devices 102-*a* where *a* and similar designators represent any whole positive integer. For example, the station devices 102-*a* may include a tablet computer 102-1, a desktop computer, monitor or display 102-2, a laptop computer 102-*a*, an access point (AP) device, a server device, or other devices that may transmit and receive radio frequencies when communicating with wireless enabled devices such as, wireless device 104. In this example, wireless device 104 may establish a wireless docking connection with one or more of the station devices 102-*a* through one or more wireless signals communicated through signal 106-*b*. In some embodiments, the wireless signals exchanged between the station devices 102-*a* and wireless device 104 may be transmitted using BTLE technology. Other embodiments are described and claimed.

In some examples, as shown in FIG. 1, system 100 includes a wireless device 104 and a plurality of devices 102-*a*, where *a* equals any positive whole integer. While not shown in FIG. 1, wireless device 104 may include an array that may include one or more antennas capable of transmitting or receiving communication signals using one or more wireless communication technologies. Also, in some examples, devices 102-*a* may include arrays similar to those of wireless device 104. The arrays may separately include one or more antennas capable of transmitting or receiving communication signals via a given wireless communication technology. Devices 102-a may also separately include one or more input/output (I/O) devices. These I/O devices may include, but are not limited to a display, a keyboard, a mouse, and a storage device, a network interface card connected to the internet or one or more audio speakers and/or microphones.

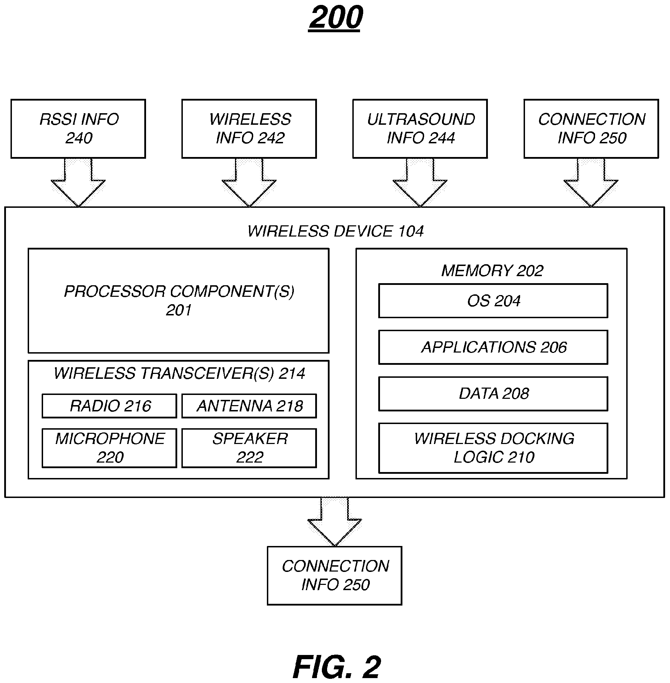

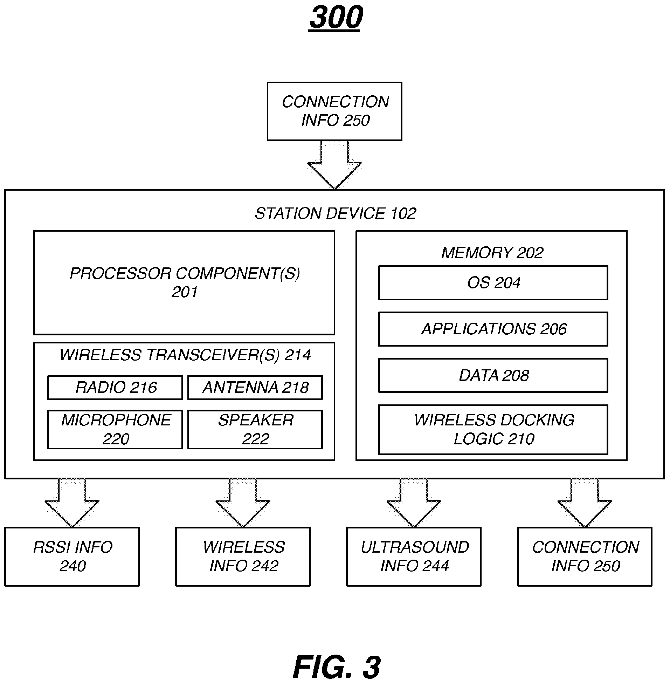

In some examples, wireless device 104 and devices 102-*a* may be arranged to operate according to the one or more wireless network technologies including but not limited to Bluetooth® technology. Although not shown in FIG. 1, wireless device 104 and devices 102-*a* may each include logic and/or features (e.g., chipsets, processor circuits, memory, protocol stacks, etc.) to operate according to any number of suitable wireless communication protocols or using any suitable wireless communication technology to transmit or receive communication signals via any suitable frequency band used. The various components and features of wireless device 104 and devices 102-*a* are shown and described in more detail with reference to FIGS. 2 and 3 respectively.

**FIG. 2** illustrates a block diagram for a first apparatus. As shown in FIG. 2, the first apparatus includes an apparatus 200. Although apparatus 200 shown in FIG. 2 has a limited number of elements in a certain topology or configuration, it may be appreciated that apparatus 200 may include more or less elements in alternate configurations as desired for a given implementation. In various embodiments, the apparatus 200 may comprise a wireless device 104 as shown in FIG. 1.

The apparatus 200 may comprise a computer and/or firmware implemented apparatus 200 having a processor component 201 arranged to execute instructions, modules, logic and/or one or more other components of apparatus 200. It is worthy to note that "*a*" and "*b*" and "*c*" and similar designators as used herein are intended to be variables representing any positive integer. Thus, for example, if an implementation sets a value for *a* = 3, then a complete set of components 102-*a* may include modules 102-1, 102-2, and 102-3. The embodiments are not limited in this context.

According to some examples, apparatus 200 may be part of a wireless device such as wireless device 104 that may be capable of operating in compliance with one or more wireless technologies such as Bluetooth® wireless technologies. For example, the wireless device having apparatus 200 may be arranged or configured to wirelessly couple to a device, such as a device 102-*a*, having one or more I/O devices via a wireless connection established and/or operated according to BTLE technology standards. The examples are not limited in this context.

In some examples, as shown in FIG. 2, apparatus 200 includes processor component 201. Processor component 201 may be generally arranged to execute one or more components, instructions, logic or applications for the apparatus 200. The processor component 201 can be any of various commercially available processors, including without limitation an AMD® Athlon®, Duron® and Opteron® processors; ARM® application, embedded and secure processors; IBM® and Motorola® DragonBall® and PowerPC® processors; IBM and Sony® Cell processors; Qualcomm® Snapdragon®; Intel® Celeron®, Core (2) Duo®, Core i3, Core i5, Core i7, Itanium®, Pentium®, Xeon®, Atom® and XScale® processors; and similar processors. Dual microprocessors, multi-core processors, and other multi-processor architectures may also be employed as processor component 201. According to some examples processor component 201 may also be an application specific integrated circuit (ASIC) and other components of apparatus 200 may be implemented as hardware elements of the ASIC. Processor component 201 may be a single processing unit or a number of processing units, all of which may include single or multiple computing units or multiple cores. The processor component 201 may be implemented as one or more microprocessors, microcomputers, microcontrollers, digital signal processors, central processing units, state machines, logic circuitries, and/or any devices that manipulate signals based on operational instructions. Among other capabilities, the processor component 201 may be configured to fetch and execute computer-readable instructions or processor-accessible instructions stored in a memory 202 or other computer-readable storage media.

Memory 202 is an example of non-transitory computer-readable storage media for storing instructions to be executed by the processor component 201 to perform the various functions described herein. For example, memory 202 may generally include both volatile memory and non-volatile memory (e.g., RAM, ROM, or the like). Memory 202 may be referred to as memory or computer-readable storage media herein. Memory 202 is capable of storing computer-readable, processor-executable program instructions as computer program code that may be executed by the processor component 201 as a particular machine configured for carrying out the operations and functions described in the implementations herein.

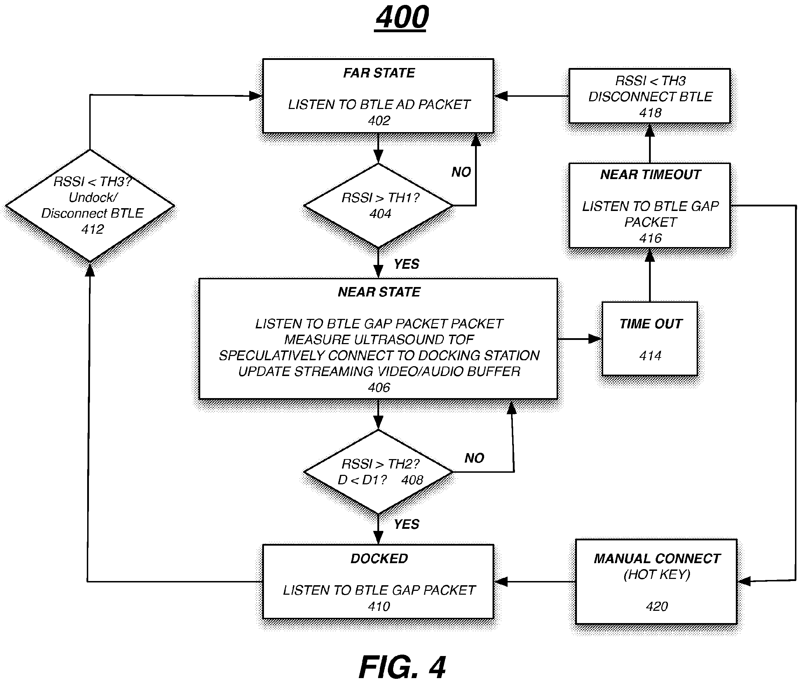

Memory 202 may include one or more operating systems 204, and may store one or more applications 206. The operating systems 204 may be one of various known and future operating systems implemented for personal computers, audio video devices, mobile devices, smartphones, tablets and the like. The applications 206 may include preconfigured/installed and downloadable applications. In addition, memory 202 may include data 208 to store the installed and downloaded applications. In an implementation, the data 208 may store ToF information for an ultrasound audio signal or other wirelessly transmitted signal that may be generated by another wireless device such as a station device 102-*a*. The embodiments are not limited in this respect. Memory 202 includes wireless docking logic 210 that may be configured to calculate a physical distance between the wireless device 104 and a station device 102-*a* and establish a wireless docking connection between the wireless device 104 and the station device 102-*a* in some embodiments. For example, the wireless docking logic 210 may receive one or more of RSSI information 240, wireless information 242, ultrasound information 244 and connection information 250 (which may be sent and/or received) from station device 102-*a*. In some embodiments, the connection information 250 may be described in more detail with reference to the logic flows of FIGS. 4-7. The embodiments are not limited in this respect.

The wireless docking logic 210 may calculate the ToF of one or more of these received signals/information and may compare the ToF calculations to determine time differences between, for example, the received wireless information 242 and the received ultrasound information 244. Accordingly, the wireless docking logic 210 may calculate the physical distance between the wireless device 104 and the station device 102-a based on the comparison as is described in more detail elsewhere herein.

In an implementation, the wireless device 104 may include a wireless transceiver 214. In various embodiments, wireless transceiver 214 may include a radio 216, antenna 218, a microphone 220, and a speaker 222. In various embodiments, antenna 218 may comprise one or more antennas, one or more antenna arrays or the like. In an implementation, the antenna 218 may be used to establish a wireless connection with the station device 102-*a*. For example, the wireless transceiver 214 may establish a link with transceiver 214 of station device 102-*a* (FIG. 3). The speaker 222 of station device 102-*a* may be used to generate the ultrasound signal and the microphone 220 of device 104 may be used to receive or capture the ultrasound information/audio signal. The ultrasound audio signal may include audio signals that are not audible to humans (e.g., 20 KHz) in some embodiments. It is to be understood that the wireless device 104 may include other communication interfaces (not shown), other than the wireless transceiver 214.

The example wireless device 104 described herein is merely an example that is suitable for some implementations and is not intended to suggest any limitation as to the scope of use or functionality of the environments, architectures and frameworks that may implement the processes, components and features described herein.

Generally, any of the functions described with reference to the figures can be implemented using software, hardware (e.g., fixed logic circuitry) or a combination of these implementations. Program code may be stored in one or more computer-readable memory devices or other computer-readable storage devices. Thus, a computer program product may implement the processes and components described herein.

As mentioned above, computer storage media includes volatile and non-volatile, removable and non-removable media implemented in any method or technology for storage of information, such as computer readable instructions, data structures, program modules, or other data. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium that can be used to store information for access by a computing device.

**FIG. 3** illustrates a block diagram for a second apparatus. As shown in FIG. 3, the second apparatus includes an apparatus 300. Although apparatus 300 shown in FIG. 3 has a limited number of elements in a certain topology or configuration, it may be appreciated that apparatus 300 may include more or less elements in alternate configurations as desired for a given implementation. In various embodiments, the apparatus 300 may comprise a station 102-*a* as described elsewhere herein. While shown as having the same or similar components as wireless device 104, it should be understand that the station device 102-*a* and wireless device 104 may have different components in some embodiments. In various embodiments, the station device 102-*a* may be operative to send one or more of RSSI information 240, wireless information 242, ultrasound information 244 and connection information 250 from station device 102-*a* to wireless device 104 to enable a wireless docking connection between the device 102-*a*, 104 as described in detail elsewhere herein. Other embodiments are described and claimed.

Included herein is a set of logic flows representative of example methodologies for performing novel aspects of the disclosed architecture. While, for purposes of simplicity of explanation, the one or more methodologies shown herein are shown and described as a series of acts, those skilled in the art will understand and appreciate that the methodologies are not limited by the order of acts. Some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all acts illustrated in a methodology may be required for a novel implementation.

A logic flow may be implemented in software, firmware, and/or hardware. In software and firmware embodiments, a logic flow may be implemented by computer executable instructions stored on at least one non-transitory computer readable medium or machine readable medium, such as an optical, magnetic or semiconductor storage. The embodiments are not limited in this context.

**FIG. 4** illustrates an example of a first logic flow. As shown in FIG. 4, the first logic flow includes a logic flow 400. Logic flow 400 may be representative of some or all of the operations executed by one or more logic, features, or devices described herein, such as wireless device 104, station device 102-*a*, apparatus 200 and/or apparatus 300 for example. More particularly, logic flow 400 may be implemented by wireless docking logic 210 of wireless device 104 and/or station device 102-*a* in some embodiments. Other embodiments are described and claimed.

In the illustrated example shown in FIG. 4, logic flow 400 at block 402 begins with a wireless device, such as wireless device 104, in a far state. A far state may comprise a state in which the wireless device 104 is out of range, beyond a threshold distance or not within a predefined proximity of a station device 102-*a*. In a far state, the wireless device 104 may conserve energy only waking up periodically to listen for an intended BTLE ad packet. For example, the wake event may occur every 1.28 seconds and may last for approximately 11.25ms. The average power consumed during the wake event may comprise 1mW, which may be less than the power consumed if the wireless device 104 were not in the reduced power state associated with the far state. While in the far state, the wireless device 104 may be operative to listen to BTLE ad packets that may be broadcast by a station device 102-*a* during the wake events. For example, the wireless device 104 may receive a wireless signal from a station device 102-*a* comprising a notification from the station device 102-*a* that the station device 102-*a* is capable of wireless docking.

As shown at 404, the logic flow may continue with the wireless device 104 determining if received signal strength indicator (RSSI) for a wireless signal received from the station device 102-*a* exceeds a first threshold. For example, the station device 102-*a* may utilize BTLE to advertise the wireless docking capabilities of the station device 102-*a* and the wireless device 104 may determine RSSI information from the advertised BTLE ad packet. If the RSSI information does not exceed the first threshold, the wireless device 104 may continue to listen to BTLE ad packets from any number of station devices 102-*a*. The RSSI information may be used as a coarse indicator of proximity in some embodiments. For example, as wireless device 104 gets closer to a station device 102-*a*, the RSSI from the station device 102-*a* may indicate an increase in the wireless signal strength. If the RSSI information exceeds the first threshold, the wireless device 104 may transition from a far state to a near state.

The logic flow at 406 shows the wireless device 104 in a near state. A near state may comprise a state in which the wireless device 104 is not in as low of a power state as when the wireless device 104 is in the far state and in the near state the wireless device 104 may be operative to establish a connection. For example, as shown at 406, the wireless device 104 may be operative to receive wireless information (e.g. BTLE packets) from the station device 102-*a*, receive ultrasound information from the station device 102-*a*, and establish a speculative connection with the apparatus using, for example, another radio (not shown). A speculative connection may comprise a temporary or non-permanent connection established when a device (e.g. wireless device 104) is not certain that a connection is desired but it is possible based on received information that a connection is desired. The use of a speculative connection may initiate the connection process such that if a connection is in fact desired, the connection can be established more quickly when confirmation that the connection is desired is received. In various embodiments, also at 406, the wireless device may be operative to update one or more streaming video/audio buffers that, in some embodiments, may be generated locally on the device 104 and may not be sent over the wireless link at this point (e.g. this may occur ater confirming the proximity). The embodiments are not limited in this respect.

At 406 and 408 the logic flow may include determining a proximity of or distance between the wireless device 104 to the station device 102-*a* using the received wireless information and ultrasound information. For example, to determine the proximity the wireless device may compare time stamp information for the received wireless information and for the received ultrasound information. In this manner, no time or clock synchronization is required between the wireless device 104 and the station device 102-*a*. Rather, the station device 102-*a* may send the wireless information and the ultrasound information simultaneously and the wireless device may be operative to determine a difference in the time when the wireless information is received and when the ultrasound information is received. Because the wireless information travels approximately at the speed of light and the ultrasound information travels approximately at the speed of sound, simply math can be used to determine a distance based on the difference in the time of receipt for the wireless information and the ultrasound information as one skilled in the art will readily understand.

At 408 the logic flow may include determining that the RSSI information exceeds a second threshold and that the proximity is within the proximity threshold. Stated differently, the wireless device 104 may be operative to determine that the RSSI information exceeds a second threshold indicating that the wireless device 104 is closer to the station device 102-*a* than when the first threshold was exceeded. Additionally, the wireless device 104 may also be operative to determine that the station device 102-*a* is within a predefined proximity or does not exceed a distance threshold from the wireless device 104. Both of these indications may be used to determine that the wireless device 104 is close enough to the station device 102-*a* to establish a wireless docking connection. The embodiments are not limited in this respect.

In some embodiments, the logic flow may include automatically establishing a non-speculative connection between the wireless device 104 and the station device 102-*a* to enable wireless docking at 410. In these embodiments, if the RSSI information exceeds the second threshold and the distance between the wireless device 104 and the station device 102-*a* does not exceed a distance threshold, a non-speculative or permanent connection may be established between the devices 104, 102-*a*. The non-speculative connection may comprise a wireless docking connection that allows information to be freely exchanged between the wireless device 104 and the station device 102-*a*. In some embodiments, for example, the speculative connection may be turned into a full connection with video/audio streaming and this full connection may comprise the non-speculative connection. Stated differently, the non-speculative connection and the speculative connection may comprise a same connection in some embodiments, where the speculative connection does not include certain full connectivity features such as video/audio streaming and the non-speculative connection includes these and other full connectivity features. In other embodiments, the non-speculative connection may not be formed automatically based on the determination at 408. In these embodiments, a manual selection by a user such as a detected press of a hot key or other input mechanism, may indicate the desire to establish the non-speculative connection and may initiate the non-speculative connection process. In these embodiments, for example, a prompt may be displayed on a display of the wireless device 104 requesting permission to establish the non-speculative wireless docking connection with the station device 102-*a*. Other embodiments are described and claimed.

While at block 410, the logic flow may include continuing the listen to the BTLE packets and receiving ultrasound information to determine if the wireless docking connection should be maintained. For example, at 412 the logic flow includes determining that the RSSI information does not exceed a third threshold or that the proximity exceeds the proximity threshold (not shown) and disconnect the non-speculative connection if either of these determination is made. If so, the wireless docking connection between the wireless device 104 and the station device 102-*a* may be disconnected and the wireless device 104 may return to the far state at 402. Returning to the near state at block 406 of the logic flow, if a predefined period of time passes prior to the RSSI information exceed the second threshold and the distance between the wireless device 104 and the station device 102-*a* not exceeding the distance threshold, the logic flow may proceed to 414 where a timeout event may occur. At 416 a near timeout may take place and the wireless device 104 may listen to BTLE packets. Additionally, from this state at 416, the wireless device may enter a wireless docking connection based on a manual button or hot key press as shown at 420 and as described above. Alternatively, the logic flow may continue to 418 where, if the RSSI is less than a third threshold which may be the same as the first threshold in some embodiments, the speculative connection may be disconnected and the wireless device 104 may be returned to the far state at 402. Other embodiments are described and claimed.

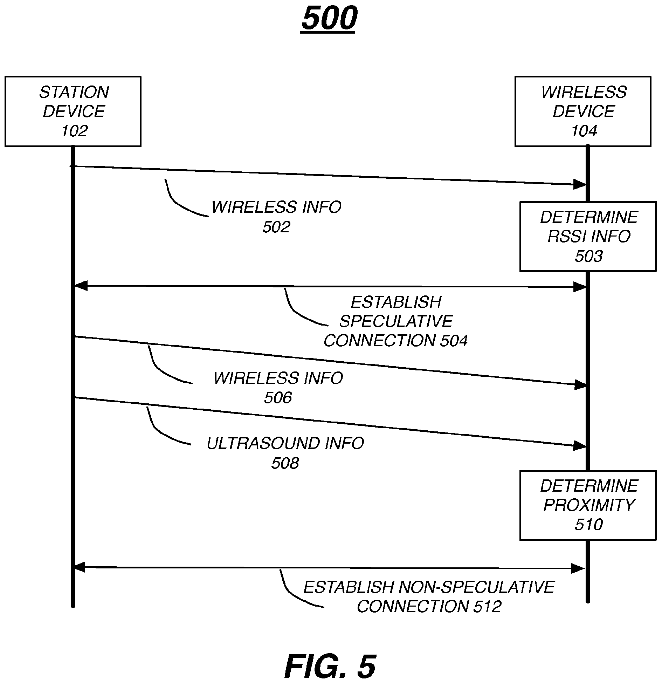

**FIG. 5** illustrates an example of a second logic flow. As shown in FIG. 5, the second logic flow includes a logic flow 500. Logic flow 500 may be representative of some or all of the operations executed by one or more logic, features, or devices described herein, such as wireless device 104 (e.g. apparatus 200) or station device 102-*a* (e.g. apparatus 300). More particularly, logic flow 500 may be representative of a signal diagram illustrating the signals that are wirelessly exchanged between a station device 102-a and a wireless device 104 to establish a wireless docking connection. The embodiments are not limited in this respect.

In the illustrated example shown in FIG. 5, RSSI information may be determined at 503 based on wireless info sent from the station device 102-*a* to the wireless device 104 at 502. In various embodiments, the RSSI information exchanged at 502 may be part of BTLE signals that are periodically broadcast by station device 102-*a* and are received during periodic wake events at wireless device 104. If the received RSSI information is greater than a first threshold, the wireless device 104 may enable a speculative connection with the station device 102-*a* at 504. At 506 the station device 102-*a* may send wireless information to the wireless device and at 508 the station device 102-*a* may send ultrasound information to the wireless device 104. In various embodiments, the wireless information and the ultrasound information are sent simultaneously to avoid the need for additional clock information of the station device 102-*a* to allow for the ToF calculations needed to determine the proximity of the wireless device 104 to the station device 102-*a* performed at 510 as described in detail elsewhere herein. In various embodiments, a non-speculative (e.g. wireless docking) connection may be formed between the wireless device 104 and the station device 102-a at 512. The non-speculative connection may be established based on the proximity determination and based on a comparison of the wireless information and/or ultrasound information to one or more thresholds. Other embodiments are described and claimed.

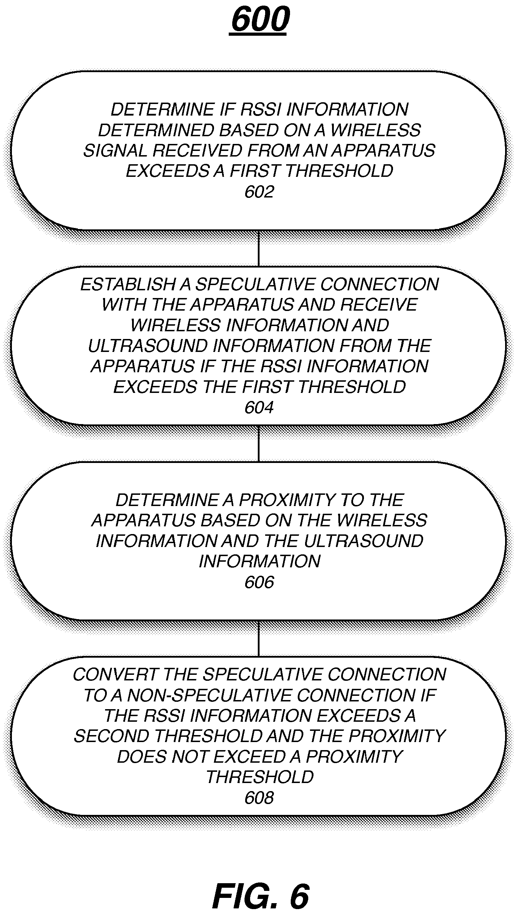

**FIG. 6** illustrates an example of a third logic flow. As shown in FIG. 6, the third logic flow includes a logic flow 600. Logic flow 600 may be representative of some or all of the operations executed by one or more logic, features, or devices described herein, such as wireless device 104 (e.g. apparatus 200). More particularly, logic flow 600 may be implemented wireless docking logic 210 of wireless device 104.

In the illustrated example shown in FIG. 6, logic flow 600 at block 602 may comprise determining if received signal strength indicator (RSSI) information exceeds a first threshold. For example, wireless device 104 may receive wireless information (e.g. BTLE ad packets) from station device 102-a and RSSI information is estimated. This RSSI information may be compared to a first threshold to determine if the wireless device 104 is within a certain range or distance from station device 102. At 604 the logic flow may comprise establishing a speculative connection with the apparatus and receiving wireless information and ultrasound information from the apparatus if the RSSI information exceeds the first threshold. For example, if the RSSI information exceeds the first threshold, the wireless device 104 and station device 102-a may establish a speculative connection for the faster establishment of a non-speculative connection at a later point if so desired.

In various embodiments, the logic flow may comprise determining a proximity to the apparatus based on the wireless information and ultrasound information at 606. For example, the wireless device 104 may be operative (e.g. via wireless docking logic 210, for example), to compare time stamps information for the wireless information and the ultrasound information which were sent simultaneously by the station device 102-a to determine a distance between the wireless device and the station device. At 608 the logic flow may comprise establishing a non-speculative connection with the apparatus if the RSSI information exceeds a second threshold and the proximity does not exceed a proximity threshold. For example, the wireless device 104 may determine based on the determined proximity information and based on an increase in RSSI information (e.g. increased from the first threshold determination) that the wireless device is close enough to the station device 102-*a* to establish a wireless docking connection. Other embodiments are described and claimed.

While not shown in FIG. 6, in various embodiments the logic flow may comprise receiving a notification from the apparatus that the apparatus is capable of wireless docking and the non-speculative connection may comprise a wireless docking connection. In other embodiments, the logic flow may comprise updating one or more of video and audio streaming buffers. The embodiments are not limited in this respect.

In some embodiments, the logic flow 600 may comprise determining the proximity based on a comparison of time stamp information for the wireless information and the ultrasound information. The logic flow 600 may further comprise transitioning from a far state to a near state if the RSSI information exceeds the first threshold. In various embodiments, the logic flow may comprise determining that the RSSI information exceeds the second threshold and that the proximity does not exceed the proximity threshold and automatically establishing the non-speculative connection. In still other embodiments, the logic flow may comprise determining that the RSSI information does not exceed the second threshold and/or that the proximity is not within the proximity threshold, and after time out, receiving manual input information, and establishing the non-speculative connection.

The logic flow 600 may comprise determining that the RSSI information does not exceed the second threshold or that the proximity exceeds the proximity threshold and disconnecting the non-speculative connection in some embodiments. In various embodiments, the logic flow may comprise periodically awakening a wireless radio to receive one or more of the RSSI information or the wireless information and the wireless information may comprise Bluetooth low energy (BTLE) information. Other embodiments are described and claimed.

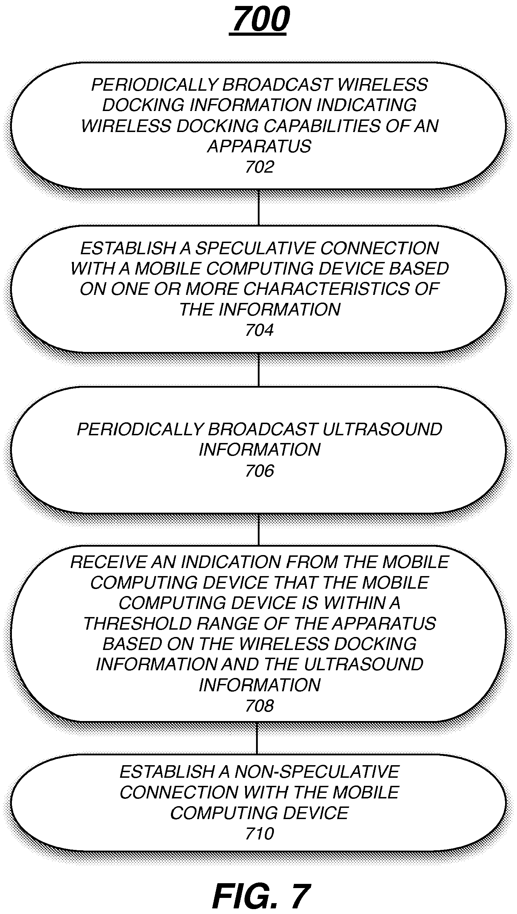

FIG. 7 illustrates an example of a fourth logic flow. As shown in FIG. 7, the fourth logic flow includes a logic flow 700. Logic flow 700 may be representative of some or all of the operations executed by one or more logic, features, or devices described herein, such as station device 102-*a* (e.g. apparatus 300). More particularly, logic flow 700 may be wireless docking logic 210 of station device 102. The embodiments are not limited in this respect.

In the illustrated example shown in FIG. 7, logic flow 700 at block 702 may comprise periodically broadcasting wireless docking information indicating wireless docking capabilities of an apparatus. For example, the station device may broadcast or otherwise wirelessly advertise its wireless docking capabilities to wireless devices in the area, including wireless device 104. At block 704, the logic flow may comprise establishing a speculative connection with a mobile computing device based on one or more characteristics of the information. For example, if it is determined that RSSI information in the wireless docking information exceeds a first threshold at the wireless device 104, the speculative connection may be established. In some embodiments, the logic flow may comprise periodically broadcasting ultrasound information at block 706. For example, station device 102-a may periodically output an audio signal comprising ultrasound information to be received by a microphone of the wireless device 104.

At block 708, the logic flow may comprise receiving an indication from the mobile computing device that the mobile computing device is within a threshold range of the apparatus based on the wireless docking information and the ultrasound information. For example, the wireless device 104 may determined a distance between the station device 102-*a* and the wireless device 104 based on time stamp information for the wireless docking information and the ultrasound information and may report to the station device 102-*a* if the wireless device 104 is within a threshold range of the station device 102. In various embodiments, the logic flow may comprise establishing a non-speculative connection with the mobile computing device at block 710. For example, the station device 102-*a* may establish a wireless docking connection with the wireless device 104 to enable the wireless device 104 to wirelessly utilize one or more features, processing components, I/O devices or other components of station device 102.

While shown in FIG. 7, the logic flow 700 may also comprise broadcasting the wireless docking information using a Bluetooth Low Energy (BTLE) radio. In other embodiments associated with the logic flow 700, the mobile computing device operative to determine the range based on time-of-flight information for the wireless docking information and the ultrasound information. Other embodiments are described and claimed.

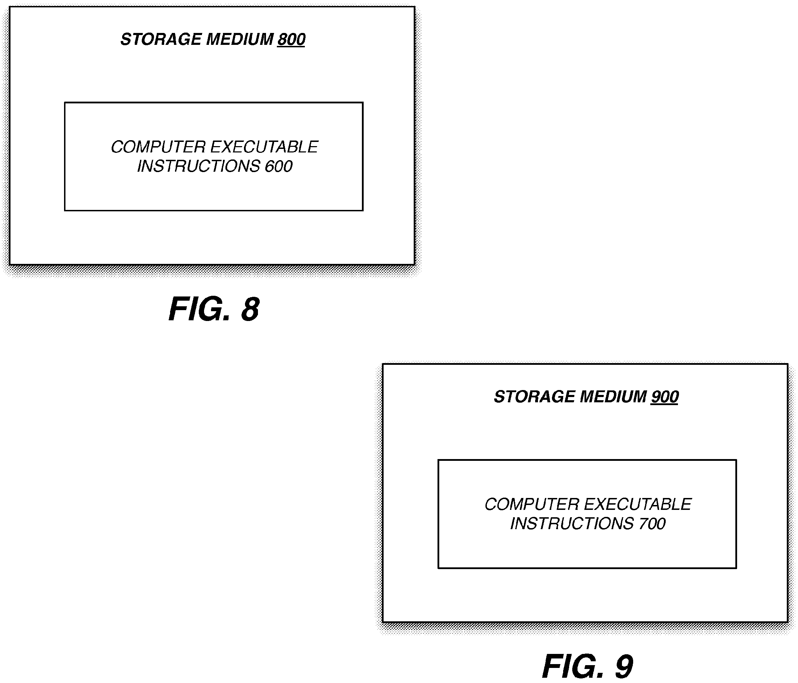

**FIG. 8** illustrates an embodiment of a first storage medium. As shown in FIG. 8, the first storage medium includes a storage medium 800. Storage medium 800 may comprise an article of manufacture. In some examples, storage medium 800 may include any non-transitory computer readable medium or machine-readable medium, such as an optical, magnetic or semiconductor storage. Storage medium 800 may store various types of computer executable instructions, such as instructions to implement logic flow 600. Examples of a computer readable or machine readable storage medium may include any tangible media capable of storing electronic data, including volatile memory or non-volatile memory, removable or non-removable memory, erasable or non-erasable memory, writeable or re-writeable memory, and so forth. Examples of computer executable instructions may include any suitable type of code, such as source code, compiled code, interpreted code, executable code, static code, dynamic code, object-oriented code, visual code, and the like. The examples are not limited in this context.

**FIG. 9** illustrates an embodiment of a second storage medium. As shown in FIG. 9, the first storage medium includes a storage medium 900. Storage medium 900 may comprise an article of manufacture. In some examples, storage medium 900 may include any non-transitory computer readable medium or machine-readable medium, such as an optical, magnetic or semiconductor storage. Storage medium 900 may store various types of computer executable instructions, such as instructions to implement logic flow 700. Examples of a computer readable or machine readable storage medium may include any tangible media capable of storing electronic data, including volatile memory or non-volatile memory, removable or non-removable memory, erasable or non-erasable memory, writeable or re-writeable memory, and so forth. Examples of computer executable instructions may include any suitable type of code, such as source code, compiled code, interpreted code, executable code, static code, dynamic code, object-oriented code, visual code, and the like. The examples are not limited in this context.

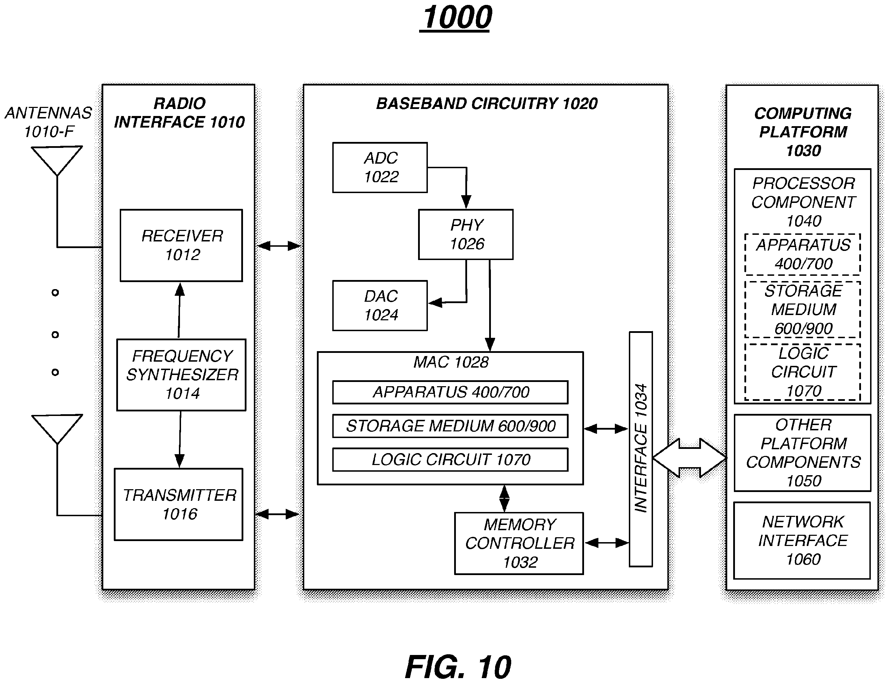

**FIG. 10** illustrates an embodiment of a device 1000. In some examples, device 1000 may be configured or arranged for wireless communications in a wireless network. Device 1000 may implement, for example, apparatus 200/300, storage medium 800/900 and/or a logic circuit 1070. The logic circuit 1070 may include physical circuits to perform operations described for apparatus 200/300. As shown in FIG. 10, device 1000 may include a radio interface 1010, baseband circuitry 1020, and computing platform 1030, although examples are not limited to this configuration.

The device 1000 may implement some or all of the structure and/or operations for apparatus 200/300, storage medium 800/900 and/or logic circuit 1070 in a single computing entity, such as entirely within a single device. The embodiments are not limited in this context.

Radio interface 1010 may include a component or combination of components adapted for transmitting and/or receiving single carrier or multi-carrier modulated signals (e.g., including complementary code keying (CCK) and/or orthogonal frequency division multiplexing (OFDM) symbols and/or single carrier frequency division multiplexing (SC-FDM symbols) although the embodiments are not limited to any specific over-the-air interface or modulation scheme. Radio interface 1010 may include, for example, a receiver 1012, a transmitter 1016 and/or a frequency synthesizer 1014. Radio interface 1010 may include bias controls, a crystal oscillator and/or one or more antennas 1018-*f*. In another embodiment, radio interface 1010 may use external voltage-controlled oscillators (VCOs), surface acoustic wave filters, intermediate frequency (IF) filters and/or RF filters, as desired. Due to the variety of potential RF interface designs an expansive description thereof is omitted.

Baseband circuitry 1020 may communicate with radio interface 1010 to process receive and/or transmit signals and may include, for example, an analog-to-digital converter 1022 for down converting received signals, a digital-to-analog converter 1024 for up converting signals for transmission. Further, baseband circuitry 1020 may include a baseband or physical layer (PHY) processing circuit 1026 for PHY link layer processing of respective receive/transmit signals. Baseband circuitry 1020 may include, for example, a processing circuit 1028 for medium access control (MAC)/data link layer processing. Baseband circuitry 1020 may include a memory controller 1032 for communicating with MAC processing circuit 1028 and/or a computing platform 1030, for example, via one or more interfaces 1034.

In some embodiments, PHY processing circuit 1026 may include a frame construction and/or detection module, in combination with additional circuitry such as a buffer memory, to construct and/or deconstruct communication frames (e.g., containing subframes). Alternatively or in addition, MAC processing circuit 1028 may share processing for certain of these functions or perform these processes independent of PHY processing circuit 1026. In some embodiments, MAC and PHY processing may be integrated into a single circuit.

Computing platform 1030 may provide computing functionality for device 1000. As shown, computing platform 1030 may include a processing component 1040. In addition to, or alternatively of, baseband circuitry 1020 of device 1000 may execute processing operations or logic for apparatus 200/300, storage medium 800/900, and logic circuit 1070 using the processing component 1030. Processing component 1040 (and/or PHY 1026 and/or MAC 1028) may comprise various hardware elements, software elements, or a combination of both. Examples of hardware elements may include devices, logic devices, components, processors, microprocessors, circuits, processor circuits (e.g., processor circuit 1020), circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software elements may include software components, programs, applications, computer programs, application programs, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given example.

Computing platform 1030 may further include other platform components 1050. Other platform components 1050 include common computing elements, such as one or more processors, multi-core processors, co-processors, memory units, chipsets, controllers, peripherals, interfaces, oscillators, timing devices, video cards, audio cards, multimedia input/output (I/O) components (e.g., digital displays), power supplies, and so forth. Examples of memory units may include without limitation various types of computer readable and machine readable storage media in the form of one or more higher speed memory units, such as read-only memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), flash memory, polymer memory such as ferroelectric polymer memory, ovonic memory, phase change or ferroelectric memory, silicon-oxide-nitride-oxide-silicon (SONOS) memory, magnetic or optical cards, an array of devices such as Redundant Array of Independent Disks (RAID) drives, solid state memory devices (e.g., USB memory, solid state drives (SSD) and any other type of storage media suitable for storing information.

Computing platform 1030 may further include a network interface 1060. In some examples, network interface 1060 may include logic and/or features to support network interfaces operated in compliance with one or more wireless broadband technologies such as those described in one or more standards associated with IEEE 802.11 such as IEEE 802.11 ad.

Device 1000 may be, for example, user equipment, a computer, a personal computer (PC), a desktop computer, a laptop computer, a notebook computer, a netbook computer, a tablet computer, an ultrabook computer, a smart phone, embedded electronics, a gaming console, a server, a server array or server farm, a web server, a network server, an Internet server, a work station, a mini-computer, a main frame computer, a supercomputer, a network appliance, a web appliance, a distributed computing system, multiprocessor systems, processor-based systems, or combination thereof. Accordingly, functions and/or specific configurations of device 1000 described herein, may be included or omitted in various embodiments of device 1000, as suitably desired. In some embodiments, device 1000 may be configured to be compatible with protocols and frequencies associated with IEEE 802.11 Standards for WLANs and/or for wireless docking, although the examples are not limited in this respect.

Embodiments of device 1000 may be implemented using single input single output (SISO) antenna architectures. However, certain implementations may include multiple antennas (e.g., antennas 1018-*f*) for transmission and/or reception using adaptive antenna techniques for beamforming or spatial division multiple access (SDMA) and/or using multiple input multiple output (MIMO) communication techniques.

The components and features of device 1000 may be implemented using any combination of discrete circuitry, application specific integrated circuits (ASICs), logic gates and/or single chip architectures. Further, the features of device 1000 may be implemented using microcontrollers, programmable logic arrays and/or microprocessors or any combination of the foregoing where suitably appropriate. It is noted that hardware, firmware and/or software elements may be collectively or individually referred to herein as "logic" or "circuit."

It should be appreciated that the exemplary device 1000 shown in the block diagram of FIG. 10 may represent one functionally descriptive example of many potential implementations. Accordingly, division, omission or inclusion of block functions depicted in the accompanying figures does not infer that the hardware components, circuits, software and/or elements for implementing these functions would be necessarily be divided, omitted, or included in embodiments.

Some examples may be described using the expression "in one example" or "an example" along with their derivatives. These terms mean that a particular feature, structure, or characteristic described in connection with the example is included in at least one example. The appearances of the phrase "in one example" in various places in the specification are not necessarily all referring to the same example.

Some examples may be described using the expression "coupled", "connected", or "capable of being coupled" along with their derivatives. These terms are not necessarily intended as synonyms for each other. For example, descriptions using the terms "connected" and/or "coupled" may indicate that two or more elements are in direct physical or electrical contact with each other. The term "coupled," however, may also mean that two or more elements are not in direct contact with each other, but yet still co-operate or interact with each other.

The following examples pertain to further embodiments.

In example one, at least one machine-readable medium may comprise a set of instructions that in response to being executed on a computing device cause the computing device to determine if received signal strength indicator (RSSI) information for a wireless signal received from an apparatus exceeds a first threshold, establish a speculative connection with the apparatus and receive wireless information and ultrasound information from the apparatus if the RSSI information exceeds the first threshold, determine a proximity to the apparatus based on the wireless information and ultrasound information, and establish a non-speculative connection with the apparatus if the RSSI information exceeds a second threshold and the proximity does not exceed a proximity threshold.

In example two, the at least one machine-readable medium of example one may comprise instructions that in response to being executed on the computing device cause the computing device to receive a notification from the apparatus that the apparatus is capable of wireless docking, the non-speculative connection comprising a wireless docking connection.

In example three, the at least one machine-readable medium of example one may comprise instructions that in response to being executed on the computing device cause the computing device to update one or more of video and audio streaming buffers.

In example four, the at least one machine-readable medium of example one may comprise instructions that in response to being executed on the computing device cause the computing device to determine the proximity based on a comparison of time stamp information for the wireless information and the ultrasound information.

In example five, the at least one machine-readable medium of example one may comprise instructions that in response to being executed on the computing device cause the computing device to transition from a far state to a near state if the RSSI information exceeds the first threshold.

In example two, the at least one machine-readable medium of example one may comprise comprising instructions that in response to being executed on the computing device cause the computing device to determine that the RSSI information exceeds the second threshold and that the proximity does not exceed the proximity threshold, and automatically establish the non-speculative connection.

In example seven, the at least one machine-readable medium of example one may comprise instructions that in response to being executed on the computing device cause the computing device to determine that the RSSI information exceeds the second threshold and that the proximity does not exceed the proximity threshold, receive manual input information, and establish the non-speculative connection.

In example eight, the at least one machine-readable medium of example one may comprise instructions that in response to being executed on the computing device cause the computing device to determine that the RSSI information does not exceed the second threshold or that the proximity exceeds the proximity threshold, and disconnect the non-speculative connection.

In example nine, the at least one machine-readable medium of example one may comprise instructions that in response to being executed on the computing device cause the computing device to periodically awaken a wireless radio to receive one or more of the RSSI information or the wireless information.

In example ten, the wireless information of any of the preceding examples may comprise Bluetooth low energy (BTLE) information.

In example eleven, an apparatus may comprise a processor component, a wireless transceiver to receive signal strength indicator (RSSI) information from a computing device, and wireless docking logic to be executed on the processor component to determine if the RSSI information exceeds a first threshold, establish a speculative connection with the computing device and receive wireless information and ultrasound information from the computing device if the RSSI information exceeds the first threshold, determine a proximity to the computing device based on the wireless information and ultrasound information, and establish a non-speculative connection with the computing device if the RSSI information exceeds a second threshold and the proximity does not exceed a proximity threshold.

In example twelve, the wireless docking logic of example eleven to receive a notification from the computing device that the computing device is capable of wireless docking, the non-speculative connection comprising a wireless docking connection.

In example thirteen, the wireless docking logic of example eleven to update one or more of video and audio streaming buffers.

In example fourteen, the wireless docking logic of example eleven to determine the proximity based on a comparison of time stamp information for the wireless information and the ultrasound information.

In example fifteen, the wireless docking logic of example eleven to transition from a far state to a near state if the RSSI information exceeds the first threshold.

In example sixteen, the wireless docking logic of example eleven to determine that the RSSI information exceeds the second threshold and that the proximity does not exceed the proximity threshold and automatically establish the non-speculative connection.

In example seventeen, the wireless docking logic of example eleven to determine that the RSSI information exceeds the second threshold and that the proximity does not exceed the proximity threshold, receive manual input information, and establish the non-speculative connection.

In example eighteen, the wireless docking logic of example eleven to determine that the RSSI information does not exceed the second threshold or that the proximity exceeds the proximity threshold and disconnect the non-speculative connection.

In example nineteen, the wireless docking logic of example eleven to periodically awaken the wireless transceiver to receive one or more of the RSSI information or the wireless information. In example twenty, the wireless transceiver of example eleven comprising a Bluetooth low energy transceiver and the wireless information comprising Bluetooth low energy (BTLE) information.

In example twenty-one, a method may comprise determining if received signal strength indicator (RSSI) information determined based on a wireless signal received from an apparatus exceeds a first threshold, establishing a speculative connection with the apparatus and receiving wireless information and ultrasound information from the apparatus if the RSSI information exceeds the first threshold, determining a proximity to the apparatus based on the wireless information and ultrasound information, and establishing a non-speculative connection with the apparatus if the RSSI information exceeds a second threshold and the proximity does not exceed a proximity threshold.

In example twenty-two, the method of example twenty-one may comprise receiving a notification from the apparatus that the apparatus is capable of wireless docking, the non-speculative connection comprising a wireless docking connection.

In example twenty-three, the method of example twenty-one may comprise updating one or more of video and audio streaming buffers.

In example twenty-four, the method of example twenty-one may comprise determining the proximity based on a comparison of time stamp information for the wireless information and the ultrasound information.

In example twenty-five, the method of example twenty-one may comprise transitioning from a far state to a near state if the RSSI information exceeds the first threshold.

In example twenty-six, the method of example twenty-one may comprise determining that the RSSI information exceeds the second threshold and that the proximity does not exceed the proximity threshold, and automatically establishing the non-speculative connection.

In example twenty-seven, the method of example twenty-one may comprise determining that the RSSI information exceeds the second threshold and that the proximity does not exceed the proximity threshold, receiving manual input information, and establishing the non-speculative connection.

In example twenty-eight, the method of example twenty-one may comprise determining that the RSSI information does not exceed the second threshold or that the proximity exceeds the proximity threshold, initiating a time out, and disconnecting the non-speculative connection.

In example twenty-nine, the method of example twenty-one may comprise periodically awakening a wireless radio to receive one or more of the RSSI information or the wireless information.

In example thirty, the wireless information of method twenty-one may comprise Bluetooth low energy (BTLE) information.

In example thirty-one, an apparatus may comprise means for performing the method of any of examples twenty-one to thirty.

In example thirty-two, at least one machine-readable medium may comprise a plurality of instructions that in response to being executed on a computing device cause the computing device to carry out a method according to any of examples twenty-one to thirty.

In example thirty-three, a communications device may be arranged to perform the method of any of examples twenty-one to thirty.

In example thirty-four, at least one machine-readable medium may comprise a set of instructions that in response to being executed on a computing device cause the computing device to periodically broadcast wireless docking information indicating wireless docking capabilities of an apparatus, establish a speculative connection with a mobile computing device based on one or more characteristics of the information, periodically broadcast ultrasound information, receive an indication from the mobile computing device that the mobile computing device is within a threshold range of the apparatus based on the wireless docking information and the ultrasound information, and establish a non-speculative connection with the mobile computing device.

In example thirty-five, the at least one machine-readable medium of example thirty-four may comprise instructions that in response to being executed on the computing device cause the computing device to broadcast the wireless docking information using a Bluetooth Low Energy (BTLE) radio.

In example thirty-six, the mobile computing device of example thirty-four operative to determine the range based on time-of-flight information for the wireless docking information and the ultrasound information.

In example thirty-seven, an apparatus may comprise a processor component, a Bluetooth Low Energy (BTLE) radio to periodically broadcast wireless docking information indicating wireless docking capabilities of the apparatus, wireless docking logic to be executed on the processor component to establish a speculative connection with a mobile computing device based on one or more characteristics of the information, and a speaker to periodically broadcast ultrasound information, the wireless docking logic to receive an indication from the mobile computing device that the mobile computing device is within a threshold range of the apparatus based on the wireless docking information and the ultrasound information and establish a non-speculative connection with the mobile computing device.

In example thirty-eight, a method may comprise periodically broadcasting wireless docking information indicating wireless docking capabilities of an apparatus, establishing a speculative connection with a mobile computing device based on one or more characteristics of the information, periodically broadcasting ultrasound information, receiving an indication from the mobile computing device that the mobile computing device is within a threshold range of the apparatus based on the wireless docking information and the ultrasound information, and establishing a non-speculative connection with the mobile computing device.

In example thirty-nine, the method of example thirty-eight may comprise broadcasting the wireless docking information using a Bluetooth Low Energy (BTLE) radio.

In example forty, the mobile computing device of example thirty-eight may be operative to determine the range based on time-of-flight information for the wireless docking information and the ultrasound information.

In example forty-one, an apparatus may comprise means for performing the method of any of examples thirty-eight to forty.

In example forty-two, at least one machine-readable medium may comprise a plurality of instructions that in response to being executed on a computing device cause the computing device to carry out a method according to any of examples thirty-eight to forty.

In example forty-three, a communications device may be arranged to perform the method of any of examples thirty-eight to forty.

In example forty-four, a system may comprise a processor component, memory coupled to the processor component, a radio coupled to the processor component, one or more antennas coupled to the radio, and wireless docking logic to be executed on the processor component to determine if received signal strength indicator (RSSI) information received from a computing device via the radio and the one or more antennas exceeds a first threshold, establish a speculative connection with the computing device and receive wireless information and ultrasound information from the computing device if the RSSI information exceeds the first threshold, determine a proximity to the computing device based on the wireless information and ultrasound information, and establish a non-speculative connection with the computing device if the RSSI information exceeds a second threshold and the proximity does not exceed a proximity threshold. In example forty-five, the wireless docking logic of example forty-four to receive a notification from the computing device that the computing device is capable of wireless docking, the non-speculative connection comprising a wireless docking connection.

In example forty-six, the wireless docking logic of example forty-four to determine the proximity based on a comparison of time-of-flight information for the wireless information and the ultrasound information.

The foregoing examples and embodiments are set forth for purposes of illustration and not limitation. It is submitted with the understanding that it will not be used to interpret or limit the scope or meaning of the claims. In addition, in the foregoing Detailed Description, it can be seen that various features are grouped together in a single example for the purpose of streamlining the disclosure. This method of disclosure is not to be interpreted as reflecting an intention that the claimed examples require more features than are expressly recited in each claim. Rather, as the following claims reflect, inventive subject matter lies in less than all features of a single disclosed example. In the appended claims, the terms "including" and "in which" are used as the plain-English equivalents of the respective terms "comprising" and "wherein," respectively. Moreover, the terms "first," "second," "third," and so forth, are used merely as labels, and are not intended to impose numerical requirements on their objects.

## Claims

1. An apparatus (104), comprising:
a processor component (201);
a wireless transceiver (214) to receive a wireless signal from a computing device;
and
wireless docking logic (210) to be executed on the processor component configured to: receive signal strength indicator, RSSI, information from the wireless signal, determine if the RSSI information exceeds a first threshold, establish a speculative connection with the computing device and receive wireless data packets and an ultrasound signal from the computing device if the RSSI information exceeds the first threshold, determine a proximity to the computing device based on the wireless data packets and ultrasound signal, and establish a non-speculative connection with the computing device if the RSSI information exceeds a second threshold and the proximity does not exceed a proximity threshold, wherein the speculative connection comprises a non-permanent connection.

2. The apparatus of claim 1, the wireless docking logic to receive a notification from the computing device that the computing device is capable of wireless docking, the non-speculative connection comprising a wireless docking connection.

3. The apparatus of claim 1, the wireless docking logic to determine the proximity based on a comparison of time stamp information for the wireless data packets and the ultrasound signal.

4. The apparatus of claim 1, the wireless docking logic to determine that the RSSI information exceeds the second threshold and that the proximity does not exceed the proximity threshold and automatically establish the non-speculative connection.

5. The apparatus of claim 1, the wireless docking logic to determine that the RSSI information exceeds the second threshold and that the proximity does not exceed the proximity threshold, receive manual input information, and establish the non-speculative connection.

6. The apparatus of claim 1, the wireless docking logic to determine that the RSSI information does not exceed the second threshold or that the proximity exceeds the proximity threshold, initiate a time out, and disconnect the non-speculative connection.

7. A method, comprising:
determining (404) if received signal strength indicator, RSSI, information
determined based on a wireless signal received from an apparatus exceeds a first threshold;
establishing (406) a speculative connection with the apparatus and receiving wireless data packets and an ultrasound signal from the apparatus if the RSSI information exceeds the first threshold, the speculative connection comprising a non-permanent connection;
determining (406, 408) a proximity to the apparatus based on the wireless data packets and ultrasound signal; and
establishing (408, 410) a non-speculative connection with the apparatus if the RSSI information exceeds a second threshold and the proximity does not exceed a proximity threshold.

8. The method of claim 7, comprising:
receiving a notification from the apparatus that the apparatus is capable of wireless docking, the non-speculative connection comprising a wireless docking connection.

9. The method of claim 7, comprising:
determining the proximity based on a comparison of time stamp information for the wireless data packets and the ultrasound signal.

10. The method of claim 7, comprising:
determining that the RSSI information exceeds the second threshold and that the proximity does not exceed the proximity threshold; and
automatically establishing the non-speculative connection.

11. The method of claim 7, comprising:
determining that the RSSI information exceeds the second threshold and that the proximity does not exceed the proximity threshold;
receiving manual input information; and
establishing the non-speculative connection.

12. The method of claim 7, comprising:
determining that the RSSI information does not exceed the second threshold or that the proximity exceeds the proximity threshold;
initiating a time out; and
disconnecting the non-speculative connection.

13. At least one machine-readable medium comprising a plurality of instructions that in response to being executed on a computing device cause the computing device to carry out a method according to any of claims 7 to 12.

## Patentansprüche

1. Einrichtung (104), die Folgendes umfasst:
eine Prozessorkomponente (201);
einen drahtlosen Sender/Empfänger (214), um ein drahtloses Signal von einer Rechenvorrichtung zu empfangen; und
eine drahtlose Ankoppellogik (210), die an der Prozessorkomponente ausgeführt werden soll, die dazu konfiguriert ist:
Signalstärkeindikatorinformationen, RSSI-Informationen, von dem drahtlosen Signal zu empfangen, zu bestimmen, ob die RSSI-Informationen einen ersten Schwellenwert überschreiten, eine spekulative Verbindung mit der Rechenvorrichtung aufzubauen und drahtlose Datenpakete und ein Ultraschallsignal von der Rechenvorrichtung zu empfangen, wenn die RSSI-Informationen den ersten Schwellenwert überschreiten, eine Nähe zur Rechenvorrichtung auf der Basis der drahtlosen Datenpakete und des Ultraschallsignals zu bestimmen, und eine nicht spekulative Verbindung mit der Rechenvorrichtung aufzubauen, wenn die RSSI-Informationen einen zweiten Schwellenwert überschreiten und die Nähe einen Näheschwellenwert nicht überschreitet, wobei die spekulative Verbindung eine nicht permanente Verbindung umfasst.

2. Einrichtung nach Anspruch 1, wobei die drahtlose Ankoppellogik eine Benachrichtigung von der Rechenvorrichtung empfangen soll, dass die Rechenvorrichtung zur drahtlosen Ankopplung in der Lage ist, wobei die nicht spekulative Verbindung eine drahtlose Ankoppelverbindung umfasst.

3. Einrichtung nach Anspruch 1, wobei die drahtlose Ankoppellogik die Nähe auf der Basis eines Vergleichs von Zeitstempelinformationen für die drahtlosen Datenpakete und des Ultraschallsignals bestimmen soll.

4. Einrichtung nach Anspruch 1, wobei die drahtlose Ankoppellogik bestimmen soll, dass die RSSI-Informationen den zweiten Schwellenwert überschreiten und dass die Nähe den Näheschwellenwert nicht überschreitet, und automatisch die nicht spekulative Verbindung aufbauen soll.

5. Einrichtung nach Anspruch 1, wobei die drahtlose Ankoppellogik bestimmen soll, dass die RSSI-Informationen den zweiten Schwellenwert überschreiten und dass die Nähe den Näheschwellenwert nicht überschreitet, manuelle Eingabeinformationen empfangen soll und die nicht spekulative Verbindung aufbauen soll.

6. Einrichtung nach Anspruch 1, wobei die drahtlose Ankoppellogik bestimmen soll, dass die RSSI-Informationen den zweiten Schwellenwert nicht überschreiten oder dass die Nähe den Näheschwellenwert überschreitet, eine Zeitüberschreitung einleiten soll und die nicht spekulative Verbindung trennen soll.

7. Verfahren, das Folgendes umfasst:
Bestimmen (404), ob Empfangssignalstärkeindikatorinformationen, RSSI-Informationen, die auf der Basis eines von einer Einrichtung empfangenen drahtlosen Signals bestimmt werden, einen ersten Schwellenwert überschreiten;
Aufbauen (406) einer spekulativen Verbindung mit der Einrichtung und Empfangen von drahtlosen Datenpaketen und eines Ultraschallsignals von der Einrichtung, wenn die RSSI-Informationen den ersten Schwellenwert überschreiten, wobei die spekulative Verbindung eine nicht permanente Verbindung umfasst;
Bestimmen (406, 408) einer Nähe zur Einrichtung auf der Basis der drahtlosen Datenpakete und des Ultraschallsignals; und
Aufbauen (408, 410) einer nicht spekulativen Verbindung mit der Einrichtung, wenn die RSSI-Informationen einen zweiten Schwellenwert überschreiten und die Nähe einen Näheschwellenwert nicht überschreitet.

8. Verfahren nach Anspruch 7, das Folgendes umfasst:
Empfangen einer Benachrichtigung von der Einrichtung, dass die Einrichtung zur drahtlosen Ankopplung in der Lage ist, wobei die nicht spekulative Verbindung eine drahtlose Ankoppelverbindung umfasst.

9. Verfahren nach Anspruch 7, das Folgendes umfasst:
Bestimmen der Nähe auf der Basis eines Vergleichs von Zeitstempelinformationen für die drahtlosen Datenpakete und des Ultraschallsignals.

10. Verfahren nach Anspruch 7, das Folgendes umfasst:
Bestimmen, dass die RSSI-Informationen den zweiten Schwellenwert überschreiten und dass die Nähe den Näheschwellenwert nicht überschreitet; und
automatisches Aufbauen der nicht spekulativen Verbindung.

11. Verfahren nach Anspruch 7, das Folgendes umfasst:
Bestimmen, dass die RSSI-Informationen den zweiten Schwellenwert überschreiten und dass die Nähe den Näheschwellenwert nicht überschreitet;
Empfangen von manuellen Eingabeinformationen; und
Aufbauen der nicht spekulativen Verbindung.

12. Verfahren nach Anspruch 7, das Folgendes umfasst:
Bestimmen, dass die RSSI-Informationen den zweiten Schwellenwert nicht überschreiten oder dass die Nähe den Näheschwellenwert überschreitet;
Einleiten einer Zeitüberschreitung; und
Trennen der nicht spekulativen Verbindung.

13. Mindestens ein maschinenlesbares Medium mit mehreren Befehlen, die in Reaktion darauf, dass sie auf einer Rechenvorrichtung ausgeführt werden, bewirken, dass die Rechenvorrichtung ein Verfahren nach einem der Ansprüche 7 bis 12 ausführt.

## Revendications

1. Appareil (104), comprenant :
un composant processeur (201) ;
un émetteur-récepteur sans fil (214) destiné à recevoir un signal sans fil en provenance d'un dispositif informatique ; et
une logique d'amarrage sans fil (210) destinée à être exécutée sur le composant processeur, configurée pour :
recevoir une information de type indicateur d'intensité de signal reçu, RSSI, à partir du signal sans fil, déterminer si l'information de type RSSI dépasse un premier seuil, établir une connexion spéculative avec le dispositif informatique et recevoir des paquets de données sans fil et un signal ultrasonore en provenance du dispositif informatique si l'information de type RSSI dépasse le premier seuil, déterminer une proximité vis-à-vis du dispositif informatique sur la base des paquets de données sans fil et du signal ultrasonore, et établir une connexion non spéculative avec le dispositif informatique si l'information de type RSSI dépasse un deuxième seuil et la proximité ne dépasse pas un seuil de proximité, la connexion spéculative comprenant en une connexion non permanente.

2. Appareil selon la revendication 1, la logique d'amarrage sans fil étant destinée à recevoir une notification en provenance du dispositif informatique indiquant que le dispositif informatique est apte à un amarrage sans fil, la connexion non spéculative comprenant une connexion d'amarrage sans fil.

3. Appareil selon la revendication 1, la logique d'amarrage sans fil étant destinée à déterminer la proximité sur la base d'une comparaison d'une information d'horodatage pour les paquets de données sans fil et du signal ultrasonore.

4. Appareil selon la revendication 1, la logique d'amarrage sans fil étant destinée à déterminer que l'information de type RSSI dépasse le deuxième seuil et que la proximité ne dépasse pas le seuil de proximité et établir automatiquement la connexion non spéculative.

5. Appareil selon la revendication 1, la logique d'amarrage sans fil étant destinée à déterminer que l'information de type RSSI dépasse le deuxième seuil et que la proximité ne dépasse pas le seuil de proximité, recevoir une information d'entrée manuelle et établir la connexion non spéculative.

6. Appareil selon la revendication 1, la logique d'amarrage sans fil étant destinée à déterminer que l'information de type RSSI ne dépasse pas le deuxième seuil ou que la proximité dépasse le seuil de proximité, déclencher une temporisation et déconnecter la connexion non spéculative.

7. Procédé, comprenant :
la détermination (404) si une information de type indicateur d'intensité de signal reçu, RSSI, déterminée sur la base d'un signal sans fil reçu en provenance d'un appareil, dépasse un premier seuil ;
l'établissement (406) d'une connexion spéculative avec l'appareil et la réception de paquets de données sans fil et d'un signal ultrasonore en provenance de l'appareil si l'information de type RSSI dépasse le premier seuil, la connexion spéculative comprenant une connexion non permanente ;
la détermination (406, 408) d'une proximité vis-à-vis de l'appareil sur la base des paquets de données sans fil et du signal ultrasonore ; et
l'établissement (408, 410) d'une connexion non spéculative avec l'appareil si l'information de type RSSI dépasse un deuxième seuil et la proximité ne dépasse pas un seuil de proximité.

8. Procédé selon la revendication 7, comprenant :
la réception d'une notification en provenance de l'appareil indiquant que l'appareil est apte à un amarrage sans fil, la connexion non spéculative comprenant une connexion d'amarrage sans fil.

9. Procédé selon la revendication 7, comprenant :
la détermination de la proximité sur la base d'une comparaison d'une information d'horodatage pour les paquets de données sans fil et du signal ultrasonore.

10. Procédé selon la revendication 7, comprenant :
la détermination que l'information de type RSSI dépasse le deuxième seuil et que la proximité ne dépasse pas le seuil de proximité ; et
l'établissement automatique de la connexion non spéculative.

11. Procédé selon la revendication 7, comprenant :
la détermination que l'information de type RSSI dépasse le deuxième seuil et que la proximité ne dépasse pas le seuil de proximité ;
la réception d'une information d'entrée manuelle ; et
l'établissement de la connexion non spéculative.

12. Procédé selon la revendication 7, comprenant :
la détermination que l'information de type RSSI ne dépasse pas le deuxième seuil ou que la proximité dépasse le seuil de proximité ;
le déclenchement d'une temporisation ; et
la déconnexion de la connexion non spéculative.

13. Support(s) lisible(s) par machine, comprenant une pluralité d'instructions dont l'exécution sur un dispositif informatique amène le dispositif informatique à mettre en œuvre un procédé selon l'une quelconque des revendications 7 à 12.
